(19) Europäisches Patentamt
European Patent Office
Office européen des brevets

(11) **EP 3 865 240 B1**

(12) **EUROPEAN PATENT SPECIFICATION**

(45) Date of publication and mention
of the grant of the patent:
**03.01.2024 Bulletin 2024/01**

(21) Application number: **19870624.4**

(22) Date of filing: **10.10.2019**

(51) International Patent Classification (IPC):
**B23K 9/073** *(2006.01)* **B23K 9/095** *(2006.01)*
**B23K 9/09** *(2006.01)* **B23K 9/173** *(2006.01)*

(52) Cooperative Patent Classification (CPC):
**B23K 9/0732; B23K 9/092; B23K 9/0953;
B23K 9/0956; B23K 9/173**

(86) International application number:
**PCT/JP2019/039944**

(87) International publication number:
**WO 2020/075791 (16.04.2020 Gazette 2020/16)**

(54) **ARC WELDING CONTROL METHOD**

VERFAHREN ZUR STEUERUNG DES LICHTBOGENSCHWEISSENS

PROCÉDÉ DE COMMANDE DE SOUDAGE À L'ARC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2018 JP 2018193220**

(43) Date of publication of application:
**18.08.2021 Bulletin 2021/33**

(73) Proprietor: **Panasonic Intellectual Property
Management Co., Ltd.
Osaka-shi, Osaka 540-6207 (JP)**

(72) Inventors:
• **NOGUCHI, Takahiro
Osaka-shi, Osaka 540-6207 (JP)**
• **NAKAGAWA, Akira
Osaka-shi, Osaka 540-6207 (JP)**
• **FUJIWARA, Junji
Osaka-shi, Osaka 540-6207 (JP)**

(74) Representative: **Vigand, Philippe et al
Novagraaf International SA
Chemin de l'Echo 3
1213 Onex - Genève (CH)**

(56) References cited:
WO-A1-2018/051911 CN-A- 102 794 549
JP-A- 2015 016 482 JP-A- 2015 030 033
JP-B2- 6 245 733 JP-B2- H0 328 260
JP-B2- H0 653 309 US-A- 5 148 001

**Description**

TECHNICAL FIELD

The present disclosure relates to an arc welding control method, in particular, to an arc welding control method by which a base material is welded by using a gas mainly containing carbon dioxide as a shield gas and alternately repeating a short circuit period and an arc period.

BACKGROUND ART

As a conventional arc welding method, there has been widely known a method by which to alternately repeat a short circuit period during which a base material as an object to be welded and a welding wire are short circuited and droplets formed at a leading end of the welding wire are transferred to the base material and an arc period during which an arc is generated between the base material and the welding wire to input heat to the base material.

According to this method, however, some of the droplets remaining on the welding wire may cause an instantaneous short circuit for a short time with the base material by an influence of a current instantaneously generated at a time of short circuit opening, thereby to cause the occurrence of sputtering, that is, dispersion and attachment of some of the droplets to the base material with deterioration in the quality of welding.

Thus, there have been proposed various methods for reducing sputtering to improve the quality of welding. Hereinafter, the phenomenon that a short circuit occurs in a very short time of 2.5 msec, for example, between the droplets formed at the leading end of the welding wire and the base material or between the welding wire and the base material, by the influence of the current instantaneously generated at a time of short circuit opening will be called minute short circuit. The minute short circuit is of very short time as compared with a normal short circuit time with a periodic welding waveform, which is a phenomenon of abnormal short circuit in a short time that is generated instantaneously.

For example, PTL 1 discloses a method for suppressing a minute short circuit and reducing sputtering by increasing a current value in the initial stage of the arc period immediately after the generation of an arc to ensure an arc length.

PTL 2 discloses a method for stabilizing the arc length by an electronic reactor control during the arc period. This method is effective in suppressing a minute short circuit, too.

PTL 3 discloses a method by which a welding current is kept at a value higher than the current during a short circuit period in the initial stage of the arc period, then the current value is decreased to a predetermined value and kept at the value for a predetermined period of time, and then the current value is increased and kept.

In this manner, after ensuring the arc length, the welding current is decreased to suppress the occurrence of a minute short circuit and sputtering in a period during which a minute short circuit is likely to occur.

Citation List

Patent Literatures

PTL 1: Unexamined Japanese Patent Publication No. 2015-016482
PTL 2: WO 2013/145569
PTL 3: CN 102 794 549 describing all the features and steps of the preamble of claim 1
PTL 4: JP 2015 030033

PTL 3 discloses an arc welding control method reflecting the preamble of present claim 1.

SUMMARY OF THE INVENTION

Technical problem

In arc welding using a gas mainly containing carbon dioxide as a shield gas, it is known that arc reaction force applied to droplets formed at the leading end of the welding wire become large. In this case, the behavior of the droplets is not stabilized and a minute short circuit and resultant sputtering is likely to occur.

In particular, this phenomenon is prominent in a welding current region where the droplets make a globular transfer to the base material. Thus, according to the conventional methods disclosed in PTL 1 and PTL 2, the suppression of a minute short circuit and sputtering may be insufficient.

According to the method disclosed in PTL 3, a welding current is decreased to reduce sputtering during the arc period, and then a state in which the current value is increased again and kept in that state for a predetermined period of time.

In this case, however, the droplets may transfer to the base material during the arc period so that the transfer cycle of the droplets may not be kept constant.

The present disclosure is devised in light of these circumstances. An object of the present disclosure is to provide an arc welding control method that suppresses the occurrence of a minute short circuit and sputtering and keep constant the transfer cycle of droplets.

Solution to problem

To attain the foregoing object, the arc welding control method according to the present invention is an arc welding control method as defined in claim 1, by which a base material is welded by using a gas mainly containing carbon dioxide as a shield gas and alternately repeating a short circuit period and an arc period. In the short circuit period, a welding current is increased from a pre-arc regeneration current value lower than a current value at a time of arc generation as a time of short circuit opening toward a first current value in the arc period. When the welding current reaches the current value at the time of arc generation, an arc is generated between the base material and the welding wire to switch from the short circuit period to the arc period.

The arc period includes first, second, third, and fourth periods in this order. In the first period, the welding current is increased with a first inclination up to the first current value so that an arc length of the arc becomes a first length. In the second period, the welding current is decreased with a second inclination from the first current value down to a second current value higher than the pre-arc regeneration current value and lower than the first current value to reduce arc reaction force applied to droplets formed at a leading end of the welding wire. In the third period, the welding current is increased from the second current value up to a third current value lower than the first current value and higher than the second current value with a third inclination so that the arc length of the arc becomes a second length.

According to this method, setting the arc length to the first length in the first period makes it possible to suppress the occurrence of a minute short circuit and sputtering. Reducing the arc reaction force in the second period makes it possible to stabilize the behavior of the droplets formed at the leading end of the welding wire. Setting the arc length to the second length in the third period in a state where the droplets are stabilized makes it possible to suppress the occurrence of a minute short circuit and sputtering and grow the droplets into a predetermined size so that the transfer cycle of the droplets can be kept constant.

Further embodiments of the present invention are defined in the dependent claims.

Advantageous effect of invention

According to the arc welding control method of the present invention, it is possible to suppress the occurrence of a minute short circuit and sputtering and implement high-quality welding with the transfer cycle of the droplets kept constant.

BRIEF DESCRIPTION OF DRAWINGS

FIG. 1 is a schematic diagram illustrating a configuration of an arc welding apparatus according to an exemplary embodiment of the present disclosure.
FIG. 2A is a time chart showing a welding current output waveform at a time of arc welding.
FIG. 2B is a time chart of an enlarged part of FIG. 2A.
FIG. 3 is a time chart showing a welding current waveform at a time of arc welding according to a modification example.

DESCRIPTION OF EMBODIMENT

Hereinafter, an exemplary embodiment of the present disclosure will be described in detail with reference to the drawings. The following description of a preferred exemplary embodiment is merely illustrative in nature and is not intended to limit the present disclosure, application, or uses.

(Exemplary embodiment)

[Configuration of an arc welding apparatus]

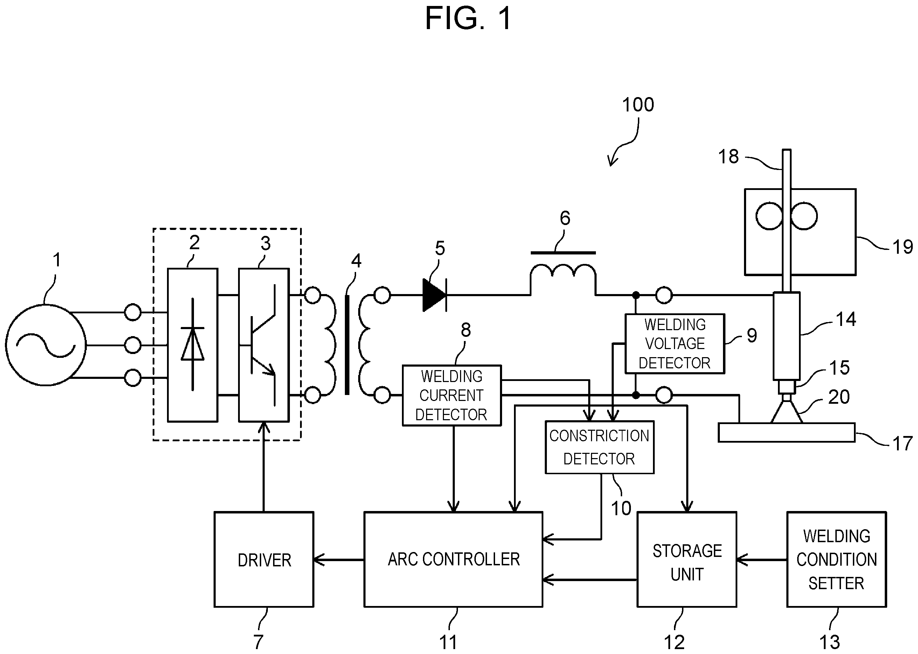

FIG. 1 is a schematic configuration diagram of arc welding apparatus 100 according to the present exemplary embodiment. Arc welding apparatus 100 includes primary rectifier 2 that rectifies alternating-current power input from input power supply 1, switcher 3 that controls a welding output, and transformer 4 that accepts an output of switcher 3 and converts the same into electric power suited for welding.

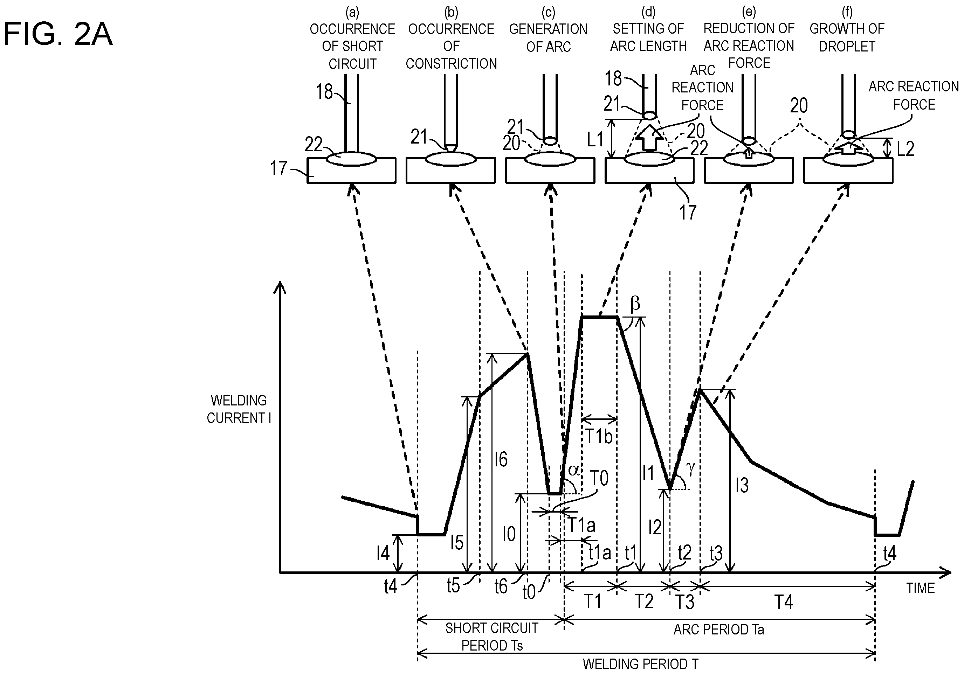

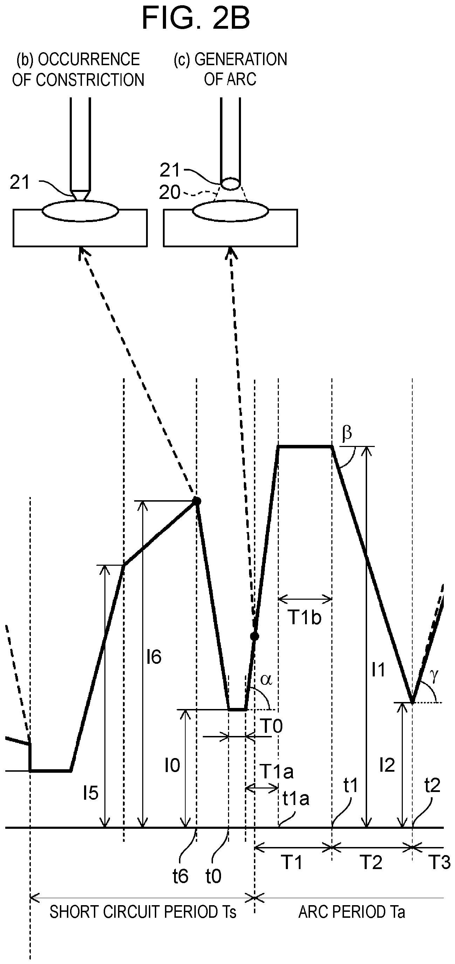

Arc welding apparatus 100 further includes secondary rectifier 5 that rectifies a secondary output of transformer 4, reactor 6 that smooths an output of secondary rectifier 5, driver 7 that drives switcher 3, welding current detector 8 that detects a welding current, welding voltage detector 9 that detects a welding voltage, and constriction detector 10 that detects occurrence of constrictions in droplets 21 (see FIGS. 2A and 2B) formed at a leading end of welding wire 18 based on outputs of welding current detector 8 and welding voltage detector 9.

Arc welding apparatus 100 further includes welding condition setting unit 13 and storage unit 12. Welding condition setting unit 13 sets welding conditions such as a preset current, a preset voltage, a wire supply amount, a shield gas type, a wire type, and a wire diameter. The preset current corresponds to a moving average value of the welding current, and the preset voltage takes on a value corresponding to a moving average value of the welding voltage. The moving average value here refers to an average value in each of specific sections determined with a shift of the section.

Storage unit 12 stores various parameters such as the welding conditions preset by welding condition setting unit 13, a feed amount as a speed at which to feed welding wire 18, and an inductance value of reactor in an electronic reactor control at each wire feed speed. The feed amount of welding wire 18 is determined in proportion to the preset current set by an operator.

Arc welding apparatus 100 further includes arc controller 11. Arc controller 11 outputs a signal for controlling the welding current and the welding voltage based on outputs from welding current detector 8, welding voltage detector 9, constriction detector 10, and storage unit 12. Driver 7 controls switcher 3 based on an output of arc controller 11.

Welding wire 18 is fed by a feed motor controlled by wire feeder 19. Welding wire 18 is supplied with welding power via chip 15 included in torch 14 so that arc 20 is generated between welding wire 18 and base material 17 to perform welding.

The components of arc welding apparatus 100 illustrated in FIG. 1 may be single ones or may be composited to constitute a plurality of components.

[About the welding current output control at a time of arc welding]

FIG. 2A illustrates a welding current output waveform at the time of arch welding according to the present exemplary embodiment, and FIG. 2B illustrates a time chart of an enlarged part of FIG. 2A, specifically, a period during which switching takes place from short circuit period Ts to arc period Ta. FIGS. 2A and 2B also illustrate a state of droplets 21 formed at a leading end of welding wire 18.

In the arc welding in the present exemplary embodiment, the welding voltage and welding current I as welding power are controlled based on the preset voltage for setting an output of the welding voltage and the preset current for setting an output of welding current I. The preset current and the preset voltage are set before welding work.

In the present exemplary embodiment, welding wire 18 has a wire diameter of 1.2 mm. Base material 17 is a plate material made of soft steel, and is a so-called medium-thickness material with a plate thickness in a range of 2.3 mm to 4.5 mm inclusive. A shield gas sprayed onto base material 17 is a gas mainly containing carbon dioxide. The "gas mainly containing carbon dioxide" refers to a gas containing carbon dioxide of 90% or more, and preferably a gas containing carbon dioxide of 100%. The gas may contain an ingredient other than carbon dioxide, for example, an inactive gas such as an argon gas. In the present exemplary embodiment, the preset current is set within a range of 160 A to 240 A inclusive, and is controlled such that droplets 21 make a short circuit transfer to base material 17 under this condition.

The arc welding in the present exemplary embodiment includes a plurality of welding periods T. Each of welding periods T includes short circuit period Ts and subsequent arc period Ta. That is, a length of welding period T is equal to a sum of a length of short circuit period Ts and a length of arc period Ta. In short circuit period Ts, arc welding apparatus 100 brings welding wire 18 and base material 17 into contact with each other so that droplets 21 formed at the leading end of welding wire 18 make a short circuit transfer to base material 17. In addition, arc welding apparatus 100 performs direct-current arc welding on base material 17 by continuously repeating welding period T, in other words, by alternately repeating short circuit period Ts and arc period Ta. Although not illustrated, welding wire 18 is sent in a forward direction to base material 17 at a constant speed based on the preset current.

When a short circuit is detected between welding wire 18 and base material 17 based on a result of detection by welding voltage detector 9 (part (a) of FIG. 2A and FIG. 2B), switching takes place from previous arc period Ta to short circuit period Ts. At switching time point t4, arc controller 11 switches the arc welding from a voltage control based on the preset voltage to a current control based on the preset current to decrease welding current I to fourth current value I4. Arc controller 11 also keeps fourth current value I4 for a predetermined period to make firm the short circuit between melt pool 22 formed on base material 17 and welding wire 18.

Next, arc controller 11 increases welding current I to fifth current value I5 to burn welding wire 18, thereby to facilitate short circuit opening between base material 17 and welding wire 18. Further, when welding current I increases, droplets 21 formed at the leading end of welding wire 18 start to be constricted due to electromagnetic pinch force (part (b) of FIG. 2A). Along with this, a temporal change amount of the welding voltage detected by welding voltage detector 9 starts to change. At time point t6 when constriction detector 10 detects this change (constriction) based on the output of welding voltage detector 9, arc controller 11 controls welding current I to decrease from sixth current value I6 to pre-arc regeneration current value I0. A time point when welding current I reaches pre-arc regeneration current value I0 will be designated as time point t0. Pre-arc regeneration current value I0 is a predetermined current value that is lower than current value I6 at the time point when the constriction is detected and is a predetermined current value at a time point immediately before arc generation. Pre-arc regeneration current value I0 is lower than a current at a time of arc generation that is a time of short circuit opening.

Pre-arc regeneration current value I0 is set to a value that is lower than the current at the time of arc generation as the time of short circuit release, which is predetermined by experiment or the like.

When welding current I takes on pre-arc regeneration current value I0, arc 20 is not yet to occur between base material 17 and welding wire 18 and thus welding period T is still short circuit period Ts. Pre-arc regeneration current value I0 is set to about 50 A, for example.

When a predetermined time (= period T0) has elapsed from time point t0, arc controller 11 increases welding current I with first inclination $\alpha$ with respect to time. In other words, in short circuit period Ts, arc controller 11 increases welding current I from pre-arc regeneration current value I0 to first current value I1 in arc period Ta. Welding current I reaches the current value at the time of arc generation as the time of short circuit opening during the increase from pre-arc regeneration current value I0 to first current value I1. When welding current I reaches the current value at the time of arc generation, an arc occurs between base material 17 and welding wire 18, and arc controller 11 switches from short circuit period Ts to arc period Ta. Arc controller 11 controls welding current I to reach first current value I1 at time point t1a. Welding current I having reached first current value I1 is kept at first current value I1 in period T1b from time point t1a to time point t1. Period T0 during which welding current I is kept at pre-arc regeneration current value I0 is set to 0.5 msec or less. After a predetermined time (period T0) has elapsed from time point t0 when welding current I has reached pre-arc regeneration current value I0, the increase of welding current I from pre-arc regeneration current value I0 to first current value I1 is started. In period T1a from the start of increase of welding current I to time point t1a when first current value I1 is reached, arc 20 starts to occur between base material 17 and welding wire 18 at a time point when welding current I becomes slightly higher than pre-arc regeneration current value I0 (part (c) of FIG. 2A). When arc 20 occurs between base material 17 and welding wire 18 at the time of short circuit opening, switching takes place from short circuit period Ts to arc period Ta. Arc controller 11 controls welding current I to keep first current value I1 in period T1b, thereby to ensure that arc length of arc 20 is first length L1 (part (d) of FIG. 2A). The period from the time point of arc generation to time point t1 is also called first period T1.

In the present exemplary embodiment, welding current I and the like are controlled such that first current value I1 is 400 A, first inclination $\alpha$ that is an upward inclination from pre-arc regeneration current value I0 to first current value I1 is 400 A/msec, and period T1b during which welding current I is kept at first current value I1 is 0.5 msec or longer.

After a lapse of period T1b, arc controller 11 decreases welding current I with second inclination $\beta$ with respect to time at time point t1 and controls welding current I to reach second current value I2 at time point t2 after a lapse of period T2 (hereinafter, called second period T2) from time point t1. At this time, welding current I is controlled such that second current value I2 is 100 A and second inclination $\beta$ that is a downward inclination from first current value I1 to second current value I2 is 200 A/msec.

This control reduces arc reaction force applied to droplets 21 formed at the leading end of welding wire 18 (part (e) of FIG. 2A). Second current value I2 lower than first current value I1 is set to be higher than pre-arc regeneration current value I0. That is, even if welding current I decreases down to second current value I2, arc 20 is stably maintained without extinction (arc extinction).

At time point t2 when welding current I reaches second current value I2 for reduction of the arc reaction force, arc controller 11 immediately increases welding current I with third inclination $\gamma$ with respect to time. Arc controller 11 causes welding current I to reach third current value I3 lower than first current value I1 at time point t3 after a lapse of period T3 (hereinafter, called third period T3) from time point t2. At this time, welding current I is controlled such that third current value I3 is 250 A, and third inclination $\gamma$ that is an upward inclination from second current value I2 to third current value I3 is 250 A/msec. That is, third current value I3 is lower than first current value I1 and higher than second current value I2. Arc controller 11 controls welding current I to reach third current value I3, thereby to ensure that arc length of arc 20 is second length L2. Arc controller 11 controls second length L2 to be shorter than first length L1. When welding current I decreased from first current value I1 reaches second current value I2 for reduction of the arc reaction force at time point t2, arc controller 11 immediately controls welding current I to start increasing again, for example, within 1 msec.

At time point t3 when welding current I reaches third current value I3 from second current value I2, arc controller 11 immediately switches the arc welding from the current control to the voltage control and performs a constant voltage control such that the welding voltage becomes constant. The voltage control is performed through period T4 (hereinafter, called fourth period T4) from time point t3 to time point t4 when switching takes place from arc period Ta to short circuit period Ts, and droplets 21 further grow during fourth period T4 (part (f) of FIG. 2A). In fourth period T4, and according to the present invention, an arc welding control is performed such that the arc length has a constant value, in this case, a value almost equal to second length L2.

Arc controller 11 controls the welding voltage to be constant by changing a total value of the inductance value of reactor 6 and the inductance value of electronic reactor by the electronic reactor control, specifically, by selecting an appropriate value from inductance values of the electronic reactor stored in storage unit 12. When welding current I reaches the third current value I3 at the time point t3, arc controller 11 immediately performs a control to switch to the voltage control. Accordingly, in fourth period T4, after third current value I3 is reached, arc controller 11 immediately controls welding current I to decrease, for example, to 0.1 msec or less.

As described above, a period from time point t2 when welding current I reaches second current value I2 to increase of welding current I in third period T3 (a first inversion period of 1 msec or less) is longer than a period from time point t3 when welding current I reaches third current value I3 to decrease of welding current I in fourth period T4 (a second inversion period of 0.1 msec or less). In other words, the first inversion period is longer than the second inversion period. Accordingly, when the stable time in the first inversion period for reduction of the arc reaction force is longer than the second inversion period, the behavior of droplets 21 in third period T3 is more stabled. Specifically, the reduction of the arc reaction force at time point t2 is more stabled and the subsequent droplet growth until time point t3 is more stabled.

[Advantageous effects]

As described above, the arc welding control method according to the present exemplary embodiment is an arc welding control method by which base material 17 is welded by using a gas mainly containing carbon oxide as a shield gas and alternately repeating short circuit period Ts and arc period Ta.

In short circuit period Ts, arc controller 11 increases welding current I from pre-arc regeneration current value I0 lower than the current value at the time of arc generation that is the time of short circuit opening to first current value I1 in arc period Ta. When welding current I reaches the current value at the time of arc generation that is the time of short circuit opening, arc 20 occurs between base material 17 and welding wire 18, and arc controller 11 switches from short circuit period Ts to arc period Ta.

Arc period Ta includes first to fourth periods T1 to T4 in this order. In first period T1, arc controller 11 increases welding current I up to first current value I1 with first inclination $\alpha$ so that the arc length of arc 20 becomes first length L1.

In second period T2, arc controller 11 decreases welding current I from first current value I1 to second current value I2 higher than pre-arc regeneration current value I0 and lower than first current value I1 (I0 < I2 < I1) with second inclination $\beta$ to reduce the arc reaction force applied to droplets 21 formed at the leading end of welding wire 18.

In third period T3, arc controller 11 increases welding current I from second current value I2 to third current value I3 lower than first current value I1 and higher than second current value I2 (I2 < I3 < I1) with third inclination $\gamma$ so that the arc length of arc 20 becomes second length L2.

According to the present exemplary embodiment, increasing welding current I to first current value I1 in first period T1 to set the arc length to first length L1 makes it possible to suppress a minute short circuit that would occur at the time of switching from short circuit period Ts to arc period Ta. Accordingly, it is possible to reduce the occurrence amount of sputtering and implement high-quality welding.

Arc controller 11 also decreases welding current I1 to second current value I2 in second period T2 to reduce the arc reaction force applied to droplets 21 formed at the leading end of welding wire 18. This makes it possible to suppress vibration and others applied to droplets 21 and stabilize the behavior of droplets 21, thereby to prevent the occurrence of a minute short circuit.

Arc controller 11 also increases welding current I1 to third current value I3 in third period T3 so that the arc length of the arc becomes third length L2. This makes it possible to prevent grown droplets 21 from unintentionally transferring to base material 17. This also makes it possible to ensure a predetermined amount of heat input to base material 17, thereby achieving desired arc welding.

In first period T1, arc controller 11 also controls welding current I to keep first current value I1 for predetermined period T1b. In third period T3, after second current value I2 is reached, arc controller 11 immediately controls welding current I to increase. In fourth period T4, after third current value T3 is reached, arc controller 11 immediately controls welding current I to decrease.

Keeping first current value I1 for predetermined period T1b makes it possible to ensure that the arc length is first length L1, thereby reliably suppressing the occurrence of a minute short circuit.

In third period T3, after second current value I2 is reached, arc controller 11 immediately increases welding current I. This suppresses the occurrence of a minute short circuit and suppresses excessive growth of droplets 21, which makes it easy to control the size of droplets 21 in fourth period T4. Similarly, in fourth period T4, after third current value I3 is reached, arc controller 11 immediately decreases welding current I. This suppresses the excessive growth of droplets 21 and makes it easy to control the size of droplets 21 in fourth period T4. After fourth period T4 in arc period Ta, arc welding apparatus 100 brings welding wire 18 and base material 17 into contact with each other to cause a short circuit therebetween, thereby to switch arc period Ta to short circuit period Ts. Arc welding apparatus 100 can reliably cause droplets 21 having stably grown during arc period Ta to make a short circuit transfer from welding wire 18 to base material 17 during short circuit period Ts. As a result, it is possible to make constant the transfer cycle of droplets 21. In other words, it is possible to make constant the transfer cycle of droplets 21 in the arc welding by which the base material is welded by using a gas mainly containing carbon dioxide as a shield gas and alternately repeating the short circuit period and the arc period. This is because droplets 21 reliably make a short circuit transfer from welding wire 18 to base material 17 during short circuit period Ts without making a globular transfer during arc period Ta. This makes it possible to prevent unevenness of welding beads at the time of high-speed welding or falling of base material 17, thereby enhancing the quality of welding.

In the present exemplary embodiment, arc controller 11 controls welding current I such that first inclination $\alpha$ is larger than an absolute value of second inclination $\beta$ and third inclination $\gamma$, and the absolute value of second inclination $\beta$ is smaller than first inclination $\alpha$ and third inclination $\gamma$.

To prevent welding wire 18 immediately after the opening of a short circuit from causing a minute short circuit with base material 17, the arc length is desirably set to a predetermined value (first length L1) in a short time. Thus, first inclination $\alpha$ is desirably large, that is, steep to some extent.

In contrast to this, at start time point t2 of third period T3, the arc reaction force is reduced but droplets 21 grow to be larger than at the time point when the arc occurred in first period T1. Therefore, if third inclination γ is set to the same as first inclination α, the arc reaction force applied to droplets 21 becomes too strong so that a short circuit may occur due to unintended vibration or falling of droplets 21. Therefore, third inclination γ is desirably smaller than first inclination α.

On the other hand, as described above, welding wire 18 is sent forward to the base material at a constant speed. Welding current I determines the amount of burning at the leading end of welding wire 18. If the absolute value of second inclination β is too large, that is, if a gradient of the downward inclination is too steep, the amount of burning of the leading end of welding wire 18 sharply becomes small. As a result, the feed amount of welding wire 18 to base material 17 is larger than the amount of burning of the leading end of welding wire 18. Accordingly, welding wire 18 may plunge into melt pool 22 and cause a short circuit in second period T2.

To prevent this, the absolute value of second inclination β is desirably smaller than a predetermined value. When third inclination γ is smaller than the absolute value of second inclination β, that is, when the gradient of upward inclination of welding current I is gentle, it is difficult to extend the arc length at time point t2 to second length L2. From the foregoing matter, the absolute value of second inclination β is desirably smaller than first inclination α and third inclination γ (β < α, β < γ). First inclination α is desirably larger than the absolute value of second inclination β and third inclination γ (α > β, α > γ).

If the absolute value of second inclination β is too small, an effect of reducing the arc reaction force will become small and the behavior of droplets 21 will not become stabilized. Therefore, the absolute value of second inclination β is desirably ensured to a degree that there occurs no minute short circuit. This process will be described later.

In the arc welding according to the present exemplary embodiment, in short circuit period Ts and first to third periods T1 to T3, arc controller 11 controls welding current I based on the preset current for setting the output of welding current I, that is, the preset current value as the moving average value of welding current I. In fourth period T4, arc controller 11 controls the welding voltage to be constant based on the preset voltage for setting the output of the welding voltage, that is, the preset voltage value as the moving average value of the welding voltage.

This makes it possible to suppress a minute short circuit and reduce sputtering in first to third periods T1 to T3. In addition, in fourth period T4 during which droplets 21 is grown to a predetermined size, the constant voltage control is performed with feedback of the previous welding voltage at each time point, thereby making it possible to reduce an influence of disturbance.

In general, there occurs disturbance in arc period Ta, such as fluctuation in a protruding length of welding wire 18 from torch 14 or a positional shift of base material 17. In this case, setting the welding voltage to be constant, for example, makes it possible to absorb the above-mentioned disturbance and maintain the arc length of arc 20 at the constant level. In addition, droplets 21 can be stably grown to a desired size. Further, performing the constant voltage control makes it possible to reduce unevenness of heat input to base material 17.

In fourth period T4, arc controller 11 may control the welding voltage to be constant by adjusting the total value of the inductance value of reactor 6 electrically connected to welding wire 18 and the inductance value of the electronic rector by the electronic reactor control.

This makes it possible to adjust a temporal change speed of the welding current to a desired value and further suppress the occurrence of sputtering.

In addition, using the gas mainly containing carbon dioxide as a shield gas allows the use of an inexpensive shield gas and the reduction of welding cost.

Feeding welding wire 18 to the base material at a constant speed and in one direction, the forward direction in this case, makes it possible to simplify a feed control of welding wire 18.

<Modification example>

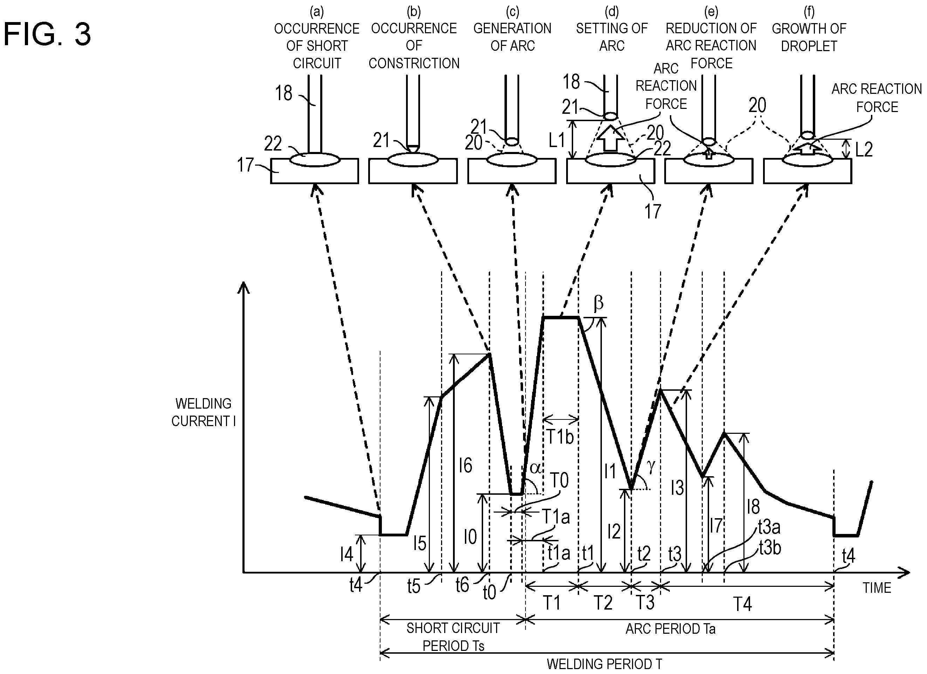

FIG. 3 shows a welding current output waveform at a time of arc welding according to a modification example. Note that parts shown in FIG. 3 similar to the parts shown in FIGS. 2A and 2B are given the same reference signs and descriptions of the parts are omitted. A drawing corresponding to FIG. 2B, that is, an enlarged view in a period of switching from short circuit period Ts to arc period Ta is the same as that in the first exemplary embodiment and thus is omitted in the present modification example.

A control method according to the present modification example shown in FIG. 3 is different from the control method according to the exemplary embodiment shown in FIGS. 2A and 2B in a waveform of the welding current in fourth period T4. Specifically, in the present modification example, arc controller 11 decreases welding current I from third current value I3 to seventh current value I7 (time point t3a), and then increases welding current I to eighth current value I8 (time point t3b).

Depending on the size of droplets 21 formed at a leading end of welding wire 18, arc reaction force applied to droplets 21 in second period T2 may not be sufficiently reduced at one time. In this case, as in the present modification example, increasing welding current I to third current value I3 and then decreasing again the current value makes it possible to reliably reduce the arc reaction force and suppress the occurrence of a minute short circuit and resultant sputtering.

Decreasing welding current I from third current value I3 to seventh current value I7 and increasing welding current I to eighth current value I8 may be performed by current control as in the exemplary embodiment or by voltage control. In the case of voltage control, arc controller 11 performs an output control with feedback of a previous welding voltage. This makes it possible to control arc welding in an easy manner. At time point t2, the arc reaction force is reduced to some degree. Thus, in either case of current control and voltage control, seventh current value I7 may be higher than second current value I2 as shown in FIG. 3. Arc controller 11 may control eighth current value I8 to be lower than third current value I3. This makes it possible to reliably reduce arc reaction force applied to droplets 21. An inclination of time during which welding current I is decreased to seventh current value may not be necessarily identical to second inclination $\beta$ and an inclination of time during which welding current I is increased from seventh current value I7 to eighth current value I8 may not be necessarily identical to third inclination $\gamma$.

(Other exemplary embodiments)

In the foregoing exemplary embodiment including the modification example, the various conditions are not limited to the values described above. For example, first to third current values I1 to I3 may vary within respective predetermined ranges. For example, first current value I1 may vary within a range of 350 A to 450 A inclusive, second current value I2 may vary within a range of 70 A to 150 A inclusive, and third current value I3 may vary within a range of 200 A to 300 A inclusive.

In this case as well, it is preferable to satisfy a relationship represented by equation (1) as follows:

$$I1 > I3 > I2 > I0 \ (1)$$

Similarly, first to third inclinations $\alpha$ to $\gamma$ may vary within respective ranges. For example, first inclination $\alpha$ may vary within a range of 400 A/msec to 500 A/msec inclusive, second inclination $\beta$ may vary within a range of 200 A/msec to 300 A/msec inclusive, and third inclination $\gamma$ may vary within a range of 250 A/msec to 350 A/msec inclusive.

In this case as well, it is preferable to satisfy a relationship represented by equation (2) as follows:

$$\alpha > \gamma > \beta \ (2)$$

Since inclinations $\alpha$, $\gamma$ and inclination $\beta$ are opposite in a direction of change, $\beta$ is represented as an absolute value in equation (2).

Second inclination $\beta$ preferably falls within the range described above under the conditions in the exemplary embodiment. In particular, since inclination $\beta$ is 200 A/msec or more, the behavior of droplets 21 becomes stabled and the occurrence of a minute short circuit and resultant sputtering is suppressed.

In contrast, when inclination $\beta$ becomes smaller than 200 A/msec, the behavior of droplets 21 does not become stabled and the occurrence of a minute short circuit and resultant sputtering becomes likely to occur.

A material for base material 17 may be high-tensile steel or galvanized steel. A thickness of base material 17 may be 2 mm or more to 5 mm or less including soft steel and materials of the soft steel.

In first period T1, period T1b during which welding current I is kept at first current value I1 is preferably set to 0.5 msec or more. In this range, it is possible to stably keep arc 20 and reliably suppress the occurrence of a minute short circuit and sputtering.

According to the arc welding control method in the exemplary embodiment described above, it is possible to implement high-quality arc welding in which the occurrence of a minute short circuit and sputtering is suppressed and the transfer cycle of droplets 21 is kept in a case where a gas mainly containing carbon dioxide is used as a shield gas, droplets 21 are grown in the arc period, and droplets 21 make a short circuit transfer to base material 17 in the short circuit period.

INDUSTRIAL APPLICABILITY

The arc welding control method in the present invention can implement arc welding in which the influence of arc reaction force is reduced and lower sputtering and cyclic property of droplet transfer are kept, and thus is effectively applicable to arc welding using a shield gas mainly containing carbon dioxide.

REFERENCE MARKS IN THE DRAWINGS

| | |
|---|---|
| 1 | input power supply |
| 2 | primary rectifier |
| 3 | switcher |
| 4 | transformer |
| 5 | secondary rectifier |
| 6 | reactor |
| 7 | driver |
| 8 | welding current detector |
| 9 | welding voltage detector |
| 10 | constriction detector |
| 11 | arc controller |
| 12 | storage unit |
| 13 | welding condition setter |
| 14 | torch |
| 15 | chip |
| 17 | base material |
| 18 | welding wire |
| 19 | wire feeder |
| 20 | arc |
| 21 | droplet |

**Claims**

**1.**    An arc welding control method by which a base material (17) is welded by using a gas mainly containing carbon dioxide as a shield gas and alternately repeating a short circuit period (Ts) and an arc period (Ta), wherein

in the short circuit period (Ts), a welding current (I) is increased from a pre-arc regeneration current value (I0) lower than a current value at a time of arc generation that is a time of short circuit opening to a first current value (I1) in the arc period (Ta),
when the welding current (I) reaches the current value at the time of arc generation,
an arc (20) occurs between the base material (17) and a welding wire (18), and switching takes place from the short circuit period (Ts) to the arc period (Ta);
**characterized in that**
the arc period (Ta) includes first (T1), second (T2), third (T3), and fourth (T4) periods in this order,
in the first period (T1), the welding current (I) is increased up to the first current value (I1) with a first inclination ($\alpha$) to set an arc length of the arc (20) to a first length (L1),
in the second period (T2), the welding current (I) is decreased from the first current value (I1) to a second current value (I2) higher than the pre-arc regeneration current value (I0) and lower than the first current value (I1) with a second inclination ($\beta$) to reduce arc reaction force applied to droplets (21) formed at a leading end of the welding wire (18), and
in the third period (T3), the welding current (I) is increased from the second current value (I2) to a third current value (I3) lower than the first current value (I1) and higher than the second current value (I2) with a third inclination ($\gamma$) to set the arc length of the arc (20) to a second length (L2) in the fourth period (T4)
wherein
in the short circuit period (Ts) and the first (T), second (T2), and third (T3) periods, the welding current is controlled based on a preset current for setting an output of the welding current,
in the fourth period (T4), the welding voltage is controlled to be constant based on a preset voltage for setting the output of the welding voltage,
in the fourth period (T4), an arc welding control is performed such that the arc length has a constant value, in this case, a value almost equal to the second length (L2).

2. The arc welding control method according to claim 1, wherein
the welding current (I) is controlled to make the first inclination ($\alpha$) larger than an absolute value of the second inclination ($\beta$) and the third inclination ($\gamma$),

and make the absolute value of the second inclination ($\beta$) smaller than the first inclination ($\alpha$) and the third inclination ($\gamma$) .

3. The arc welding control method according to claim 1, wherein
in the fourth period (T4), the welding voltage is controlled to be constant by adjusting a total value of an inductance value of a reactor electrically connected to the welding wire (18) and an inductance value of an electronic rector by an electronic reactor control.

4. The arc welding control method according to any one of claims 1 to 3, wherein
the base material (17) is a plate material selected from among soft steel, high-tension steel, and galvanized steel, and a thickness of the plate material is 2 mm to 5 mm inclusive.

5. The arc welding control method according to any one of claims 1 to 4, wherein

in the first period (T1), the welding current (I) is controlled to keep the first current value (I1) for a predetermined period of time,
in the third period (T3), immediately after the second current value (I2) is reached, the welding current (I) is controlled to increase, and
in the fourth period (T4), immediately after the third current value (I3) is reached, the welding current (I) is controlled to decrease.

6. The arc welding control method according to claim 5, wherein

after the fourth period (T4) of the arc period (Ta), the welding wire (18) and the base material (17) are brought into contact with each other to cause a short circuit to perform switching from the arc period (Ta) to the short circuit period (Ts), and during the short circuit period (Ts), the droplets (21) are caused to make a short circuit transfer from the welding wire (18) to the base material (17).

7. The arc welding control method according to claim 5, wherein

a first inversion period is taken from an instant when the welding current (I) reaches the second current value (I2) to an instant when the welding current (I) increases,
a second inversion period is taken from an instant when the welding current (I) reaches the third current value (I3) to an instant when the welding current (I) decreases, and
the first inversion period is longer than the second inversion period.

**Patentansprüche**

1. Verfahren zur Steuerung des Lichtbogenschweißens, durch das ein Grundmaterial (17) unter Verwendung eines Gases, das hauptsächlich Kohlendioxid enthält, als ein Schutzgas, und unter abwechselndem Wiederholen einer Kurzschlussperiode (Ts) und einer Lichtbogenperiode (Ta) geschweißt wird, wobei

   in der Kurzschlussperiode (Ts) ein Schweißstrom (I) von einem Stromwert (I0) vor einer erneuten Erzeugung des Lichtbogens, der niedriger als ein Stromwert an einem Zeitpunkt der Lichtbogenerzeugung ist, der ein Zeitpunkt der Kurzschlussöffnung ist, auf einen ersten Stromwert (I1) in der Lichtbogenperiode (Ta) erhöht wird,
   wenn der Schweißstrom (I) den Stromwert am Zeitpunkt der Lichtbogenerzeugung erreicht, ein Lichtbogen (20) zwischen dem Grundmaterial (17) und einem Schweißdraht (18) auftritt und ein Schalten von der Kurzschlussperiode (Ts) auf die Lichtbogenperiode (Ta) auftritt; **dadurch gekennzeichnet, dass**
   die Lichtbogenperiode (Ta) eine erste (T1), eine zweite (T2), eine dritte (T3) und eine vierte (T4) Periode in dieser Reihenfolge umfasst,
   in der ersten Periode (T1) der Schweißstrom (I) mit einer ersten Steigung ($\alpha$) bis auf den ersten Stromwert (I1) erhöht wird, um eine Lichtbogenlänge des Lichtbogens (20) auf eine erste Länge (L1) einzustellen,
   in der zweiten Periode (T2) der Schweißstrom (I) mit einer zweiten Steigung ($\beta$) vom ersten Stromwert (I1) auf einen zweiten Stromwert (I2), der höher als der Stromwert (I0) vor der erneuten Erzeugung des Lichtbogens und niedriger als der erste Stromwert (I1) ist, abnimmt wird, um Lichtbogenreaktionskraft, die auf Tropfen (21) angewandt wird, zu vermindern, die an einem vorderen Ende des Schweißdrahts (18) gebildet werden, und
   in der dritten Periode (T3) der Schweißstrom (I) mit einer dritten Steigung ($\gamma$) vom zweiten Stromwert (I2) auf einen dritten Stromwert (I3), der niedriger als der erste Stromwert (I1) und höher als der zweite Stromwert (I2) ist, erhöht wird, um die Lichtbogenlänge des Lichtbogens (20) in der vierten Periode (T4) auf eine zweite Länge (L2) einzustellen,
   wobei
   in der Kurzschlussperiode (Ts) und der ersten (T), der zweiten (T2) und der dritten Periode (T3) der Schweißstrom basierend auf einem voreingestellten Strom zum Einstellen einer Abgabe des Schweißstroms gesteuert wird,
   in der vierten Periode (T4) die Schweißspannung basierend auf einer voreingestellten Spannung zum Einstellen der Abgabe der Schweißspannung gesteuert wird, um konstant zu sein,
   in der vierten Periode (T4) eine Lichtbogenschweißsteuerung derart durchgeführt wird, dass die Lichtbogenlänge einen konstanten Wert, in diesem Fall einen Wert, der nahezu gleich der zweiten Länge (L2) ist, aufweist.

2. Verfahren zur Steuerung des Lichtbogenschweißens nach Anspruch 1, wobei
   der Schweißstrom (I) derart gesteuert wird, dass die erste Steigung ($\alpha$) größer als ein Absolutwert der zweiten Steigung ($\beta$) und der dritten Steigung ($\gamma$) gemacht wird und der Absolutwert der zweiten Steigung ($\beta$) kleiner als die erste Steigung ($\alpha$) und die dritte Steigung ($\gamma$) gemacht wird.

3. Verfahren zur Steuerung des Lichtbogenschweißens nach Anspruch 1, wobei
   in der vierten Periode (T4) die Schweißspannung durch Anpassen eines Gesamtwerts eines Induktivitätswerts eines Reaktors, der elektrisch mit dem Schweißdraht (18) verbunden ist, und eines Induktivitätswerts eines elektronischen Reaktors durch eine elektronische Reaktorsteuerung gesteuert wird, um konstant zu sein.

4. Verfahren zur Steuerung des Lichtbogenschweißens nach einem der Ansprüche 1 bis 3, wobei
   das Grundmaterial (17) ein Plattenmaterial ist, das ausgewählt wird aus Weichstahl, Hochspannungsstahl und galvanisiertem Stahl und eine Dicke des Plattenmaterials 2 mm bis einschließlich 5 mm beträgt.

5. Verfahren zur Steuerung des Lichtbogenschweißens nach einem der Ansprüche 1 bis 4, wobei

   in der ersten Periode (T1) der Schweißstrom (I) gesteuert wird, um den ersten Stromwert (I1) während einer vorbestimmten Zeitperiode zu halten,
   in der dritten Periode (T3), unmittelbar nachdem der zweite Stromwert (I2) erreicht wurde, der Schweißstrom (I) gesteuert wird, um zu erhöhen, und
   in der vierten Periode (T4), unmittelbar nachdem der dritte Stromwert (I3) erreicht wurde, der Schweißstrom (I) gesteuert wird, um abzunehmen.

6. Verfahren zur Steuerung des Lichtbogenschweißens nach Anspruch 5, wobei

   nach der vierten Periode (T4) der Lichtbogenperiode (Ta) der Schweißdraht (18) und das Grundmaterial (17) miteinander in Kontakt gebracht werden, um einen Kurzschluss zu verursachen, um Schalten von der Lichtbogenperiode (Ta) zur Kurzschlussperiode (Ts) durchzuführen, und

während der Kurzschlussperiode (Ts) bewirkt wird, dass die Tropfen (21) eine Kurzschlussübertragung von dem Schweißdraht (18) auf das Grundmaterial (17) vornehmen.

7. Verfahren zur Steuerung des Lichtbogenschweißens nach Anspruch 5, wobei

eine erste Inversionsperiode von einem Zeitpunkt, an dem der Schweißstrom (I) den zweiten Stromwert (I2) erreicht, zu einem Zeitpunkt genommen wird, an dem der Schweißstrom (I) erhöht,

eine zweite Inversionsperiode von einem Zeitpunkt, an dem der Schweißstrom (I) den dritten Stromwert (I3) erreicht, zu einem Zeitpunkt genommen wird, an dem der Schweißstrom (I) abnimmt, und

die erste Inversionsperiode länger ist als die zweite Inversionsperiode.

## Revendications

1. Procédé de commande de soudage à l'arc par lequel un matériau de base (17) est soudé en utilisant un gaz contenant principalement du dioxyde de carbone comme un gaz de protection et en répétant en alternance une période de court-circuit (Ts) et une période d'arc (Ta), dans lequel

pendant la période de court-circuit (Ts), un courant de soudage (I) est augmenté, d'une valeur de courant pré-régénération d'arc (I0) inférieure à une valeur de courant à un moment de génération d'arc qui est un moment d'ouverture de court-circuit, à une première valeur de courant (I1) pendant la période d'arc (Ta),

lorsque le courant de soudage (I) atteint la valeur de courant au moment de génération d'arc, un arc (20) se produit entre le matériau de base (17) et un fil de soudage (18), et une commutation a lieu de la période de court-circuit (Ts) à la période d'arc (Ta) ;

**caractérisé en ce que**

la période d'arc (Ta) inclut des première (T1), deuxième (T2), troisième (T3) et quatrième (T4) périodes dans cet ordre,

pendant la première période (T1), le courant de soudage (I) est augmenté jusqu'à la première valeur de courant (I1) avec une première pente ($\alpha$) pour établir une longueur d'arc de l'arc (20) sur une première longueur (L1),

pendant la deuxième période (T2), le courant de soudage (I) est diminué de la première valeur de courant (I1) à une deuxième valeur de courant (I2) supérieure à la valeur de courant pré-régénération d'arc (I0) et inférieure à la première valeur de courant (I1) avec une deuxième pente ($\beta$) pour réduire une force de réaction d'arc appliquée à des gouttelettes (21) formées à une extrémité avant du fil de soudage (18), et

pendant la troisième période (T3), le courant de soudage (I) est augmenté de la deuxième valeur de courant (I2) à une troisième valeur de courant (I3) inférieure à la première valeur de courant (I1) et supérieure à la deuxième valeur de courant (I2) avec une troisième pente ($\gamma$) pour établir la longueur d'arc de l'arc (20) sur une seconde longueur (L2) pendant la quatrième période (T4)

dans lequel

pendant la période de court-circuit (Ts) et les première (T), deuxième (T2) et troisième (T3) périodes, le courant de soudage est commandé sur la base d'un courant préétabli pour l'établissement d'une sortie du courant de soudage,

pendant la quatrième période (T4), la tension de soudage est commandée pour être constante sur la base d'une tension préétablie pour l'établissement de la sortie de la tension de soudage,

pendant la quatrième période (T4), une commande de soudage à l'arc est réalisée de sorte que la longueur d'arc possède une valeur constante, dans ce cas, une valeur presque égale à la seconde longueur (L2).

2. Procédé de commande de soudage à l'arc selon la revendication 1, dans lequel

le courant de soudage (I) est commandé pour faire en sorte que la première pente ($\alpha$) soit plus grande qu'une valeur absolue de la deuxième pente ($\beta$) et de la troisième pente ($\gamma$), et faire en sorte que la valeur absolue de la deuxième pente ($\beta$) soit plus petite que la première pente ($\alpha$) et la troisième pente ($\gamma$).

3. Procédé de commande de soudage à l'arc selon la revendication 1, dans lequel

pendant la quatrième période (T4), la tension de soudage est commandée pour être constante par l'ajustement d'une valeur totale d'une valeur d'inductance d'un réacteur électriquement connecté au fil de soudage (18) et d'une valeur d'inductance d'un recteur électronique par une commande de réacteur électronique.

4. Procédé de commande de soudage à l'arc selon l'une quelconque des revendications 1 à 3, dans lequel

le matériau de base (17) est un matériau en plaque sélectionné parmi l'acier doux, l'acier à haute tension et l'acier galvanisé, et une épaisseur du matériau en plaque est de 2 mm à 5 mm inclus.

5. Procédé de commande de soudage à l'arc selon l'une quelconque des revendications 1 à 4, dans lequel

pendant la première période (T1), le courant de soudage (I) est commandé pour maintenir la première valeur de courant (I1) pendant une durée prédéterminée,

pendant la troisième période (T3), immédiatement après que la deuxième valeur de courant (I2) est atteinte, le courant de soudage (I) est commandé pour augmenter, et

pendant la quatrième période (T4), immédiatement après que la troisième valeur de courant (I3) est atteinte, le courant de soudage (I) est commandé pour diminuer.

6. Procédé de commande de soudage à l'arc selon la revendication 5, dans lequel

après la quatrième période (T4) de la période d'arc (Ta), le fil de soudage (18) et le matériau de base (17) sont amenés en contact l'un avec l'autre pour amener un court-circuit à réaliser une commutation de la période d'arc (Ta) à la période de court-circuit (Ts), et

au cours de la période de court-circuit (Ts), les gouttelettes (21) sont amenées à effectuer un transfert par court-circuit du fil de soudage (18) au matériau de base (17).

7. Procédé de commande de soudage à l'arc selon la revendication 5, dans lequel

une première période d'inversion est prise d'un instant auquel le courant de soudage (I) atteint la deuxième valeur de courant (I2) à un instant auquel le courant de soudage (I) augmente,

une seconde période d'inversion est prise d'un instant auquel le courant de soudage (I) atteint la troisième valeur de courant (I3) à un instant auquel le courant de soudage (I) diminue, et

la première période d'inversion est plus longue que la seconde période d'inversion.

# FIG. 1

# FIG. 2A

EP 3 865 240 B1

# FIG. 2B

(b) OCCURRENCE OF CONSTRICTION

(c) GENERATION OF ARC

SHORT CIRCUIT PERIOD Ts

ARC PERIOD Ta

FIG. 3

(a) OCCURRENCE OF SHORT CIRCUIT
(b) OCCURRENCE OF CONSTRICTION
(c) GENERATION OF ARC
(d) SETTING OF ARC
(e) REDUCTION OF ARC REACTION FORCE
(f) GROWTH OF DROPLET

EP 3 865 240 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015016482 A
- WO 2013145569 A
- CN 102794549
- JP 2015030033 A